# EUROPÄISCHE PATENTANMELDUNG

(11) **EP 2 360 096 A2**
(43) Veröffentlichungstag der Anmeldung: **24.08.2011**
(21) Anmeldenummer: 11001091.5
(22) Anmeldetag: 10.02.2011
(51) Int. Cl.: B64D 17/02

(54) **Gleitschirm**

(30) Priorität: 11.02.2010 DE 202010002234 U
(71) Anmelder: Swing Flugsportgeräte GmbH, 82290 Landsberied (DE)
(72) Erfinder: Wörl, Günter, 82290 Landsberied (DE)
(74) Vertreter: Laufhütte, Dieter

(57) **Zusammenfassung**

Die vorliegende Erfindung betrifft eine Gleitschirmkappe (10), insbesondere für Gleit-, Flexikite, Surfkite- und Modellbauschirme bestehend aus einem Obersegel (11) und einem Untersegel (12) sowie aus ein Profil bildenden Profilrippen, wobei mindestens ein Verstärkungselement (100) vorgesehen ist, dessen Enden mittelbar oder unmittelbar miteinander schubsteif verbunden sind, wodurch ein in sich geschlossenes ringförmiges Verstärkungselement (100) ausgebildet ist.

## Beschreibung

Die vorliegende Erfindung betrifft eine Gleitschirmkappe, insbesondere für Gleit-, Flexikite, Surfkite- und Modellbauschirme, mit einem Ober- und Untersegel und ein Profil bildenden Profilrippen oder bestehend aus einem Obersegel und Ring-Konstruktionen, die ein Profil bzw. Profilrippen bilden.

Die Bezeichnung Gleitschirm wird regelmäßig als Oberbegriff für die vollständige Ausrüstung zum Gleitschirmfliegen bezeichnet, die im wesentlichen aus einer Gleitschirmkappe besteht, die durch Leinen mit dem den Piloten aufnehmendem Gurtzeug verbunden ist. Die Gleitschirmkappe weist eine zweilagige Tragfläche auf, die in Ober- und Untersegel unterteilt und oftmals aus einem Nylonstoff angefertigt ist. Daneben gibt es weitere Konstruktionen, bei den Ring-Konstruktionen das Profil bzw. Profilrippen bilden und auf ein Untersegel ganz oder teilweise verzichtet wird. Zur Profilgebung der Gleitschirmkappe sind zwischen Ober- und Untersegel senkrecht stehende Profilrippen eingearbeitet, die den gesamten Innenraum der Gleitschirmkappe in eine Vielzahl von in Flugrichtung parallel zueinander liegenden Kammern unterteilt.

Optimale Flugeigenschaften bzw. eine optimale Auftriebserzeugung stellt sich bei einer einer Tragfläche ähnlichen Profilgebung der Gleitschirmkappe ein. An der Vorderkante der Gleitschirmkappe, auch als Anströmkante bezeichnet, sind ein oder mehrere Eintrittsöffnungen angeordnet, über die während der Flugphase Luft ins Kappeninnere gelangt und dort angestaut wird. Der resultierende Überdruck im Kammerinneren sorgt für die erwünschte Profilgebung des Gleitschirms.

Gegenwärtige Gleitschirmkappen sehen zur verbesserten Krafteinleitung während des Fluges oder zur Versteifung konkreter Profilbereiche der Gleitschirmkappe Verstärkungen im Kappeninneren vor. Hierzu werden Stoffverstärkungen auf das Ober- bzw. Untersegel der Gleitschirmkappe aufgenäht oder anderweitig an diesem befestigt. Alternative Ausführungen sehen eine Befestigung im Kammerinnenraum der Gleitschirmkappe von biaxial orientierten Polyesterfolien oder einzelnen Stäbchenelementen vor um eine profilformverstärkende Wirkung zu erzielen.

Derartige bekannte Verstärkungen der Gleitschirmkappe sind aber oftmals unter realistischen Flugbedingungen nicht ausreichend, um die Profilform der Gleitschirmkappe zu stabilisieren. Gerade während der Aufzieh- und Startphase, insbesondere unter erschwerten Wetterbedingungen, kann es zum Eindellen der Profilnase im Obersegelbereich kommen. Die Verformungen im Nasenbereich führen zur Verkleinerung bzw. Beeinträchtigung der Eintrittsöffnungen und verzögern als Folge den Füllvorgang der Kammern. Die nicht optimale Umströmung der Gleitschirmkappe während des Füllvorgangs beeinflußt die Flugeigenschaften des Gerätes negativ, insbesondere während der Startphase, und ist wünschenswert möglichst gering bzw. zeitlich sehr kurz zu halten. Auch bei extremen Flugmanövern, wie beispielsweise dem Schnellflug oder dem Trimm- und Langsamflug, wird durch die bekannten Verstärkungen nur eine unbefriedigende Stabilisierung der Profilform der Gleitschirmkappe erzielt. Die Optimierung der Profilformstabilität durch Verwendung von größeren und stärkeren Verstärkungsmitteln führt allerdings zu einer unnötigen Gewichtszunahme des Gleitschirms und verschlechtert im allgemeinen das Flugverhalten des Gleitschirms.

Die Aufgabe der vorliegenden Erfindung besteht darin, die Gleitschirmkappe eines Gleitschirms, Flexikiteschirms oder Surfkiteschirms zusätzlich oder erstmalig gezielt zu verstärken, um insbesondere während des Startvorgangs oder sonstigen Flugphasen, eine verbesserte und den geforderten Ansprüchen genügende Profiltreue und reduzierte Verhängertendenz der Gleitschirmkappe zu erreichen.

Die vorliegende Aufgabe wird durch die Merkmalskombination des Anspruchs 1 gelöst. Demnach besteht eine Gleitschirmkappe aus einem Ober- und einem Untersegel sowie aus ein Profil bildenden Profilrippen oder aus einem Obersegel und Ring-Konstruktionen, die ein Profil bzw. Profilrippen bilden.

Die Profilrippen bilden eine Vielzahl von Luftkammern zwischen Ober- und Untersegel, die über vorhandene Einlassöffnungen mit Luft gefüllt werden und der Gleitschirmkappe eine bevorzugte Profilform verleihen. Erfindungsgemäß ist zur Erhöhung der Profiltreue mindestens ein Verstärkungselement an der Gleitschirmkappe angeordnet, dessen Enden mittelbar oder unmittelbar miteinander schubsteif einen Ring bildend verbunden sind und ein in sich geschlossenes Verstärkungselement ausbilden. Die resultierende Ringform bietet hervorragende Steifigkeits- und Elastizitätseigenschaften, die den gestellten Anforderungen an das Verstärkungselement bezüglich Profilstabilisierung und Flexibilität im zusammengelegten Transportzustand der Gleitschirmkappe genügen. Erst die erfindungsgemäße in sich geschlossene Formung des Verstärkungselementes, insbesondere die ringförmige Struktur des Verstärkungselementes, führt zu den gewünschten Steifigkeitseigenschaften, die eine ausreichende Profiltreue des Gleitschirms auch während der Aufzieh- und Startphase und unter extremen Flugbedingungen wie Schnellflug, Trimm- und Langsamflug, gewährleisten. Die Elastizität erlaubt dennoch die Gleitschirmkappe zusammengefaltet zu lagern. Ferner stellt die erfindungsgemäße Formgebung des Verstärkungselementes keine speziellen Anforderungen an die gewählte Materialart, weshalb ein besonders leichtgewichtiges Material zur Herstellung des Verstärkungselementes ausgewählt und dennoch eine ausreichende Stabilisierungswirkung erreicht werden kann.

Es ist nicht zwingend erforderlich, die beiden Enden des Verstärkungselementes direkt miteinander zu verbinden. In einer bevorzugten Ausgestaltung der Erfindung sind die beiden Enden wenigstens eines Verstärkungselementes mittels eines oder mehrerer beliebiger Elemente des Gleitschirms schubsteif miteinander verbunden. Beispielsweise können bereits in die Gleitschirmkappe integrierte herkömmliche Verstärkungselemente verwendet werden, um eine geschlossene Struktur bzw. eine ringförmige Struktur des erfindungsgemäßen Verstärkungselementes herzustellen. Ebenfalls ist es denkbar, durch die gezielte Einbringung von Versteifungselementen in die Ringform des Verstärkungselementes die Steifigkeit an bestimmten Bereichen zu erhöhen oder alternativ zu reduzieren.

Um die Form der Gleitschirmkappe während der Startphase zu stabilisieren und ein Eindellen der Nase im Obersegelbereich aufgrund des geringen Innendrucks zu vermeiden, sind bevorzugt ein oder mehrere Verstärkungselemente im Profilnasenbereich des Gleitschirms angeordnet. Hierdurch wird insbesondere ein Eindellen der Profilnase verhindert, das zur Verkleinerung der Einlassöffnungen der Kammern führt und den Füllvorgang unnötig verzögert.

Im Schnellflug wandert der Staupunkt auf das Obersegel der Gleitschirmkappe, so dass kein ausreichender Innendruck zur Erhaltung der ursprünglichen Form der Profilnase und/oder des Gesamtprofils gewährleistet werden kann. Aufgrund des Profilverlustes kann es zu einem gefährlichen Zusammenschieben der Gleitschirmkappe im Bereich der Aufhängepunkte in Flugrichtung kommen. Zur Vermeidung derartiger Gefahrensituationen ist es vorteilhaft, ein oder mehrere Verstärkungselemente im Aufhängebereich der Gleitschirmkappe anzuordnen.

Besonders vorteilhaft ist es, wenn sich ein oder mehrere Verstärkungselemente über die gesamte Profilform der Gleitschirmkappe erstrecken. Hierdurch wird die Gleitschirmkappe über ihren gesamten Profilumfang verstärkt und eine besonders hohe Profiltreue erreicht.

Denkbar ist es, dass ein oder mehrere Verbindungselemente gleiche oder unterschiedliche Formen aufweisen. Als geeignete Formen erweisen sich insbesondere eine Kreisform, eine Ellipsenform, eine Tropfenform, eine Zylinderform oder drei-und/oder mehreckige Formen, insbesondere Dreieck- oder Trapezformen. Grundsätzlich sind beliebige Ausformungen des Verstärkungselementes denkbar, wobei lediglich eine eine Ringform bildende geschlossene Formgebung des Verbindungselementes vorausgesetzt ist.

Insbesondere wird wenigstens ein Verstärkungselement auf der den Kammern zugewandten Seite der Gleitschirmkappe angeordnet. Dabei wird das Verstärkungselement durch gezielte Maßnahmen an der Innenwand der Kammer befestigt. Grundsätzlich ist jedoch auch eine beliebig beabstandete Anordnung des Verstärkungselementes zur Innenwand der Kammer denkbar. Möglich ist auch eine Anordnung des Verstärkungselementes mit variabler Beabstandung zur Kammerwand. Besonders bevorzugt verläuft das Verstärkungselement entlang der Innenwandung der Kammer im gesamten zu verstärkenden Bereich der Gleitschirmkappe.

Vorteilhafterweise ist wenigstens ein Verstärkungselement durch Aufkleben und/oder Aufschweißen und/oder Auf- bzw. Einnähen dauerhaft oder lösbar am Gleitschirm befestigt.

Alternativ kann wenigstens ein Verstärkungselement in mindestens einer dafür vorgesehenen Führung bzw. Tasche innerhalb der Gleitschirmkappe eingebracht werden. Hierdurch ergibt sich die Möglichkeit, ein oder mehrere Verstärkungselemente lösbar mit dem Gleitschirm zu verbinden bzw. an diesem anzuordnen. Somit kann ein Gleitschirm nur bei Bedarf mit ein oder mehreren Verstärkungselementen versehen werden, welche zur Gewichtsreduzierung bzw. zur Verpackung des Gleitschirms aus diesem ausgelöst und entfernt werden können.

In einer besonders bevorzugten Ausführungsvariante weist der Gleitschirm wenigstens ein Verstärkungselement auf, das aus Kunststoff, insbesondere aus einer

Kunststofffaser besteht. Als besonders geeignet erweist sich ein Verstärkungselement, das aus einer schnurförmigen Kunststofffaser gebildet ist und eine ringförmige Form aufweist. Dadurch ergeben sich einerseits hervorragende Biege- und Elastizitätseigenschaften des Verstärkungselementes und andererseits wird eine optimale Steifigkeit des Verstärkungselementes erreicht, das die Anforderungen an die Verstärkungsfähigkeit bzw. die resultierende Profiltreue befriedigt. Als zweckmäßig erweist sich eine Stärke der Kunststoffschnur mit einem Durchschnitt von 1 bis 5 mm, besonders bevorzugt einem Durchschnitt von 2 bis 3 mm.

Möglich ist es auch, dass wenigstens ein Verstärkungselement aus einem Stoffmaterial und/oder einem Foliematerial und/oder einem oder mehreren Stäbchenelementen und/oder einem sonstigen Material besteht. Dies entspricht den bereits bekannten Ausführungen eines Verstärkungselementes, das jedoch durch die erfindungsgemäße geschlossene Formgebung bezüglich der Verstärkungseigenschaften maßgeblich optimiert wird.

Eine besondere Ausgestaltung der Gleitschirmkappe sieht mindestens ein Verstärkungselement vor, dass in Sandwichbauweise hergestellt ist. Die geschlossene Form (Ringform) kann vollständig oder nur in einzelnen Teilbereichen in Sandwichbauweise ausgeführt sein. Denkbar sind Ausführungen des Verstärkungselementes in Sandwichbauweise aus Stoffmaterialen und/oder Folienmaterialen und/oder Kunststoffmaterialen und/oder sonstige Materialen.

Die vorliegende Erfindung bezieht sich ferner auf ein Verstärkungselement zur Verstärkung einer Gleitschirmkappe, wobei das Verstärkungselement erfindungsgemäß eine geschlossene Form, insbesondere eine Ringform aufweist und zur vollständigen bzw. teilweisen Verstärkung einer Gleitschirmkappe an dieser anbringbar ist. Hierdurch lassen sich bekannte Gleitschirmkappen nachrüsten und gezielt einzelne Teilbereiche des Profils bzw. das vollständige Profil der Gleitschirmkappe verstärken.

Die erfindungsgemäßen Verstärkungselemente lassen sich mittels Aufkleben, Aufschweißen, Auf- bzw. Einnähen oder Einbringen in dazu vorgesehenen Führungen und/oder Taschen an einer Gleitschirmkappe befestigen.

Das Verstärkungselement kann bevorzugt aus einem Kunststoff, insbesondere einer Kunststofffaser bestehen. Möglich ist auch eine Ausführung aus einem Stoffmaterial und/oder einem Folienmaterial und/oder ähnlichen Materialien. Besonders vorteilhaft ist eine Ausführung des Verstärkungselementes in Sandwichbauweise aus einem oder mehreren der vorgenannten Materialarten. Hierzu gehören auch Bowdenzüge, die wahlweiße mit Stahaldraht (oder anderen Metallen) Verbundwerkstoffen (z.B. Kohle- oder Glasfaser) und Kunstoffen kombiniert werden.

Durch Einbringung des erfindungsgemäßen Verstärkungselementes ergibt sich bevorzugt eine Gleitschirmkappe mit den Merkmalen nach einem der Ansprüche 1 bis 9.

Weitere Vorteile, Einzelheiten und Merkmale der Erfindung ergeben sich aus den in den Zeichnungen dargestellten Ausführungsbeispielen. Es zeigen:
- Figuren 1a - 2b:: mehrere Darstellungen eines Querschnitts in Flugrichtung durch den Profilnasenbereich der erfindungsgemäßen Gleitschirmkappe mit unterschiedlichen Verstärkungselementen,
- Figuren 3a - 3c:: Profilrippen der erfindungsgemäßen Gleitschirmkappe mit verschiedenen Ausführungen des Verstärkungselementes und
- Figuren 4a - 4d:: mehrere Darstellungen eines Querschnitts in Flugrichtung durch die erfindungsgemäße Gleitschirmkappe im Bereich eines Aufhängepunktes mit unterschiedlichen Ausführungen des Verstärkungselementes.

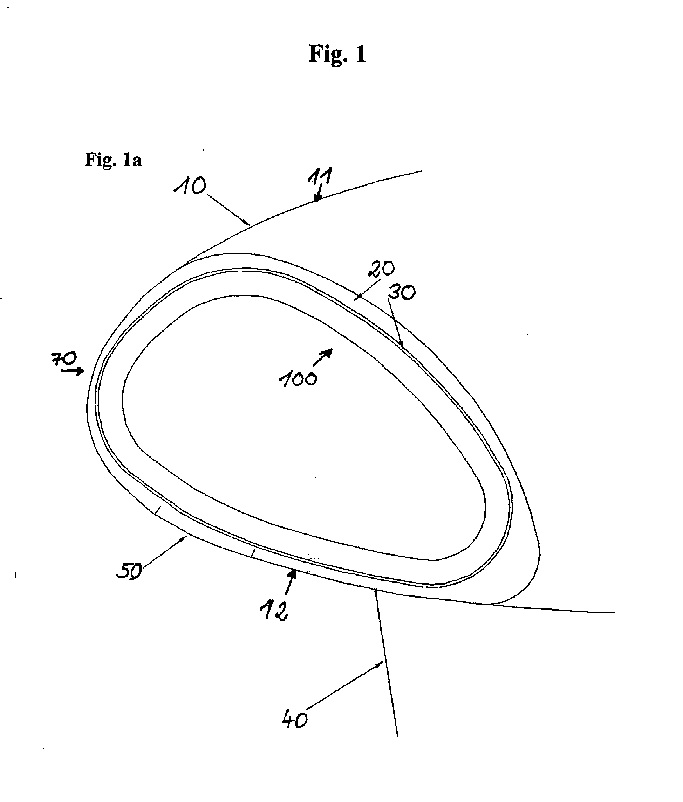

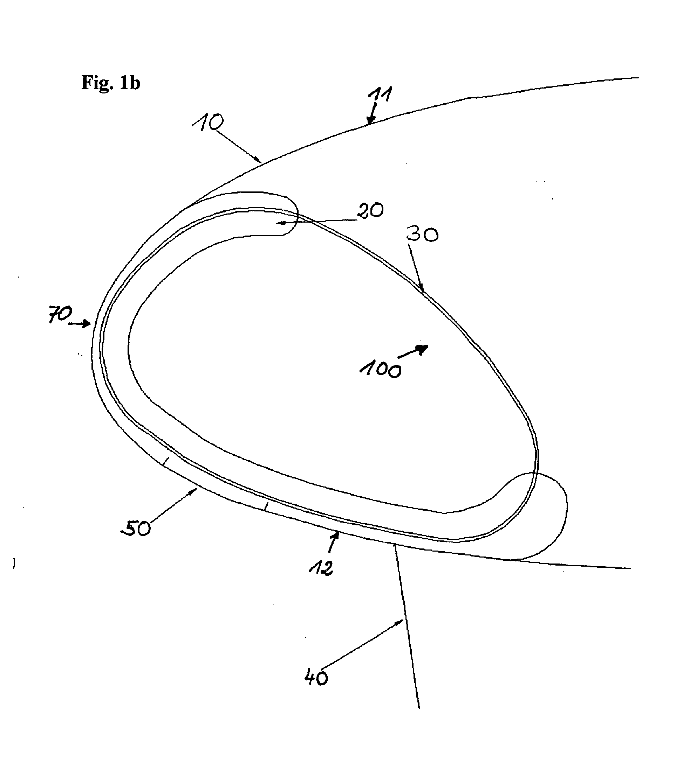

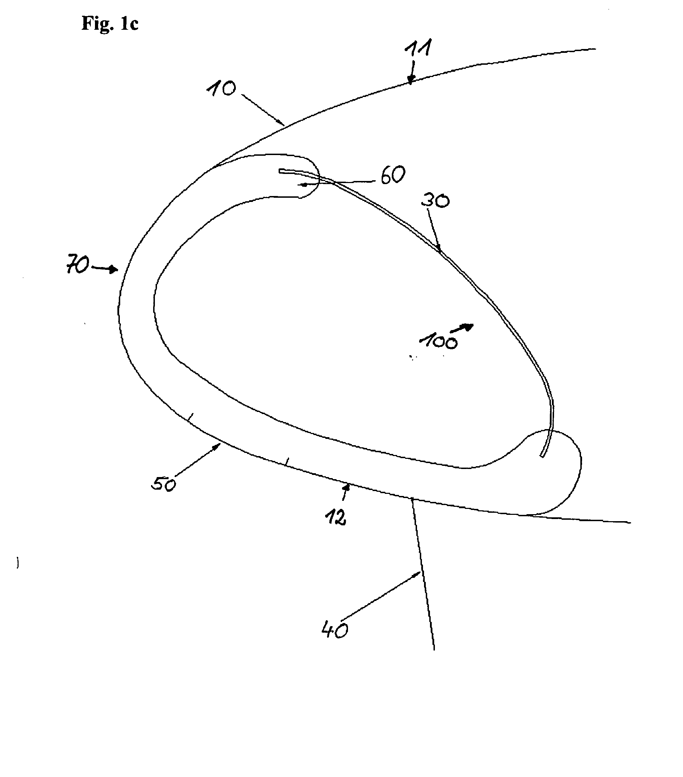

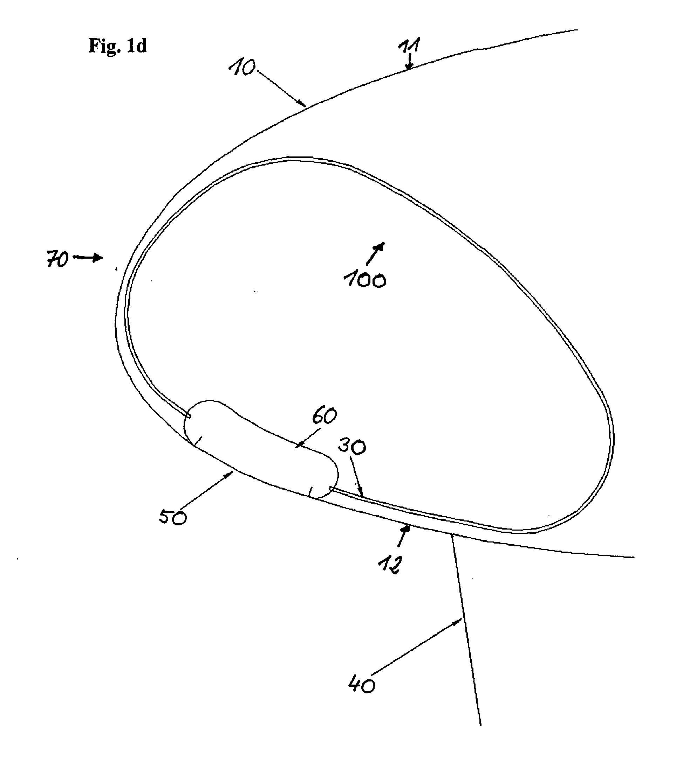

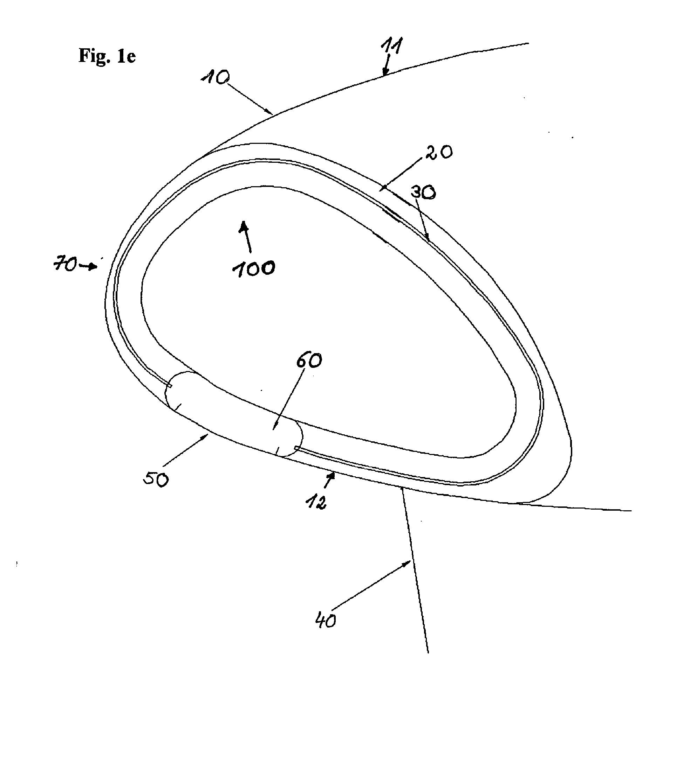

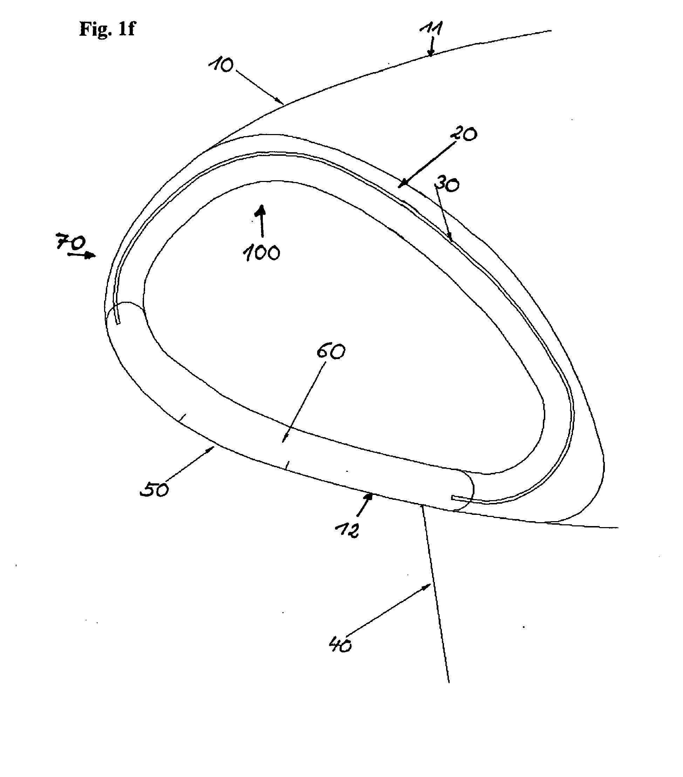

Die Figuren 1 bis 3 zeigen einen Querschnitt in Flugrichtung durch den Profilnasenbereich der Gleitschirmkappe 10. Die Tragfläche läßt sich in Obersegel 11 und Untersegel 12 unterteilen, wobei der dazwischen liegende Hohlraum zur besseren Formgebung mittels mehrerer Profilrippen in diverse Kammern untergliedert wird, welche an der Hinterkante verschlossen sind. Dies verleiht den Gleitschirmen zusammen mit der von vorne durch die in Nähe der Anströmkante 70 plazierten Eintrittsöffnungen 50 einströmenden Luft das notwendige Flügelprofil.

Von der Segelunterseite 12 führen Fangleinen 40 in mehreren Ebenen zu den Tragegurten herab, die den Piloten aufnehmen.

Während des Startvorgangs reichen in der Regel der Innendruck und die vorherrschende Umströmung noch nicht aus, um die Form der Kappe 10 zu stabilisieren. Folglich kommt es zum Eindellen der Nase im Obersegelbereich 11, wodurch die Eintrittsöffnungen 50 verkleinert, der Füllvorgang verzögert und die Umströmung erschwert wird. Somit steigt die Kappe 10 schlechter und der Start wird erschwert.

Im Schnellflug reicht der Innendruck, sobald der Staupunkt auf das Obersegel 11 wandert, nicht mehr aus, um die ursprüngliche Form der Nase und/oder des Profils zu erhalten. Auch im Trimm- und Langsamflug können Verformungen im Nasenbereich, des Profils und dort speziell beim Anbremsen der Kappe 10 im Bereich der Austrittskante auftreten, die sich negativ auf die Flugeigenschaften in Bezug auf Sicherheit und Leistung auswirken. Bekannte Verstärkungsmittel erreichen oftmals nur eine unbefriedigende Profiltreue der Kappe 10. Größere und stärkere Gesamtverstärkungen erhöhen das Gewicht und verschlechtern das Extremflugverhalten durch die Gefahr des Verhängens der Leinen 40 nach einer Einklappung in den dann steiferen Profilnasen.

Zur Lösung des Problems wird erfindungsgemäß ein ringförmiges Verstärkungselement im Profilnasenbereich der Kappe 10 eingebracht. Die Ausführung der Figur 1 a zeigt ein ringförmiges Verstärkungselement 100, das in Sandwichbauweise aus einer Kunststoffschnur oder -band 30 von einem anderweitigen Material 20, insbesondere von einem Stoff- oder Folienmaterial, vollständig umgeben ist. Das Verstärkungselement 100 bildet eine in sich geschlossene ovalförmige Form und verläuft zumindest teilweise entlang der innen liegenden Kammerwand des Ober- und Untersegels 11, 12 im Nasenbereich der Kappe 10, so dass das Profil der Nase, insbesondere die Ausformung der Anströmkante 70, stabilisiert wird. Die Befestigung des Verstärkungselementes 100 erfolgt durch Verkleben und/oder Verschweißen und/oder Ein- bzw. Aufnähen auf oder in die Kappe 10. Denkbar sind auch Ausführungen, die Führungen oder Taschen zur lösbaren Einbringung der Verstärkungselemente 100 an oder in der Kappenwand vorsehen. Die Kunststoffschnur weist einen Durchmesser von 2 bis 3 mm auf.

In Figur 1b ist eine alternative Variante des Verstärkungselementes 100 dargestellt. Zur Gewichtseinsparung ist nur der an der Kammerwand verlaufende Bereich des Verstärkungselementes 100 in Sandwichbauweise ausgeführt. Eine geschlossene Ringform des Verstärkungselementes 100 ist dennoch gewährleistet.

Die Figuren 1c und 1d zeigen Mischformen des erfindungsgemäßen Verstärkungselementes 100, wobei durch gezielte Einbringung von einem oder mehreren Versteifungselementen 60 die Ringform des Verstärkungselementes 100 gezielt an definierten Bereichen zusätzlich verstärkt bzw. versteift werden soll. Die ovale Ringform wird durch die schubsteife Verbindung unterschiedlicher Materialarten des Verstärkungselementes 100 gebildet. In beiden Ausführungen wird eine Kunststoffschnur 30 verwendet, die mit dem Element 60 in unterschiedlicher Größenauslegung zu einem in sich geschlossenen ringförmigen Verstärkungselement 100 geformt wird. Das Größenverhältnis der Elemente 30, 60 zueinander ist frei wählbar und wird gemäß den entsprechenden Anforderungen an Elastizität, Gewicht und Steifigkeit des Verstärkungselementes 100 dimensioniert.

Figur 1e zeigt die Ausführung des Verstärkungselementes 100 in teilweiser Sandwichbauweise aus den Elementen 20, 30, sowie die Kombination des Sandwichbereichs mit dem Versteifungslement 60 zur Schließung der Ringform. Dabei kann das Element 60 auch ein beliebiges bereits existierendes Element der Gleitschirmkappe 10, wie beispielsweise eine bereits angeordnete Teilverstärkung, sein. Alle Verbindungen müssen schubsteif miteinander verbunden sein.

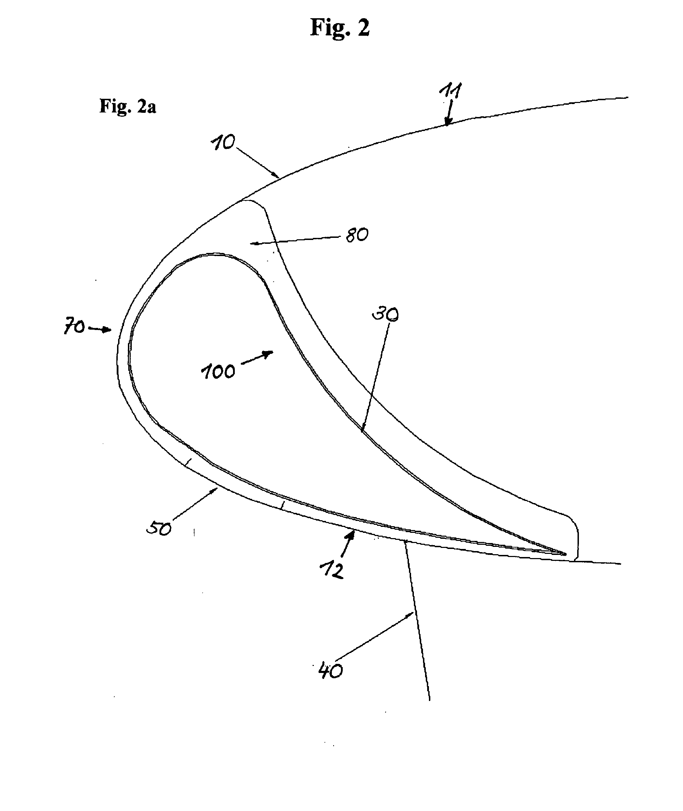

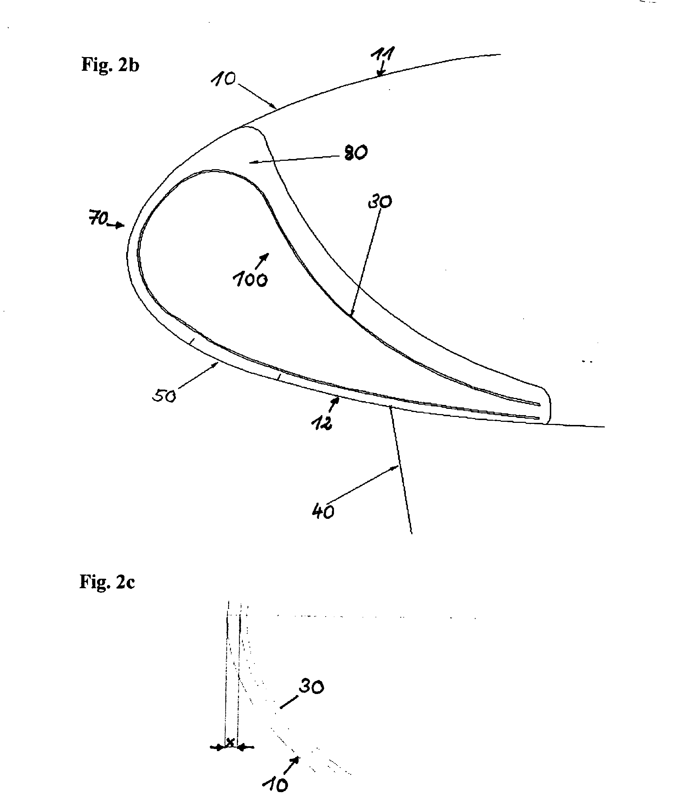

Die Figuren 2a und 2b zeigen zwei Querschnittsdarstellungen durch die Profilnase einer Gleitschirmkappe 10 mit einer zusätzlich aufgebrachten Verstärkung 80. Hierbei wird im Bereich zur Optimierung der bereits aus dem Stand der Technik bekannten Verstärkung 80 die erfindungsgemäße ringförmige Verstärkung 30 aufgebracht. Wie der Figur 2b zu entnehmen ist, muß das erfindungsgemäße Verstärkungselement 30 nicht zwingend geschlossen sein. Der vollständige Verschluß wir durch die zusätzliche Verstärkung 80 erzielt.

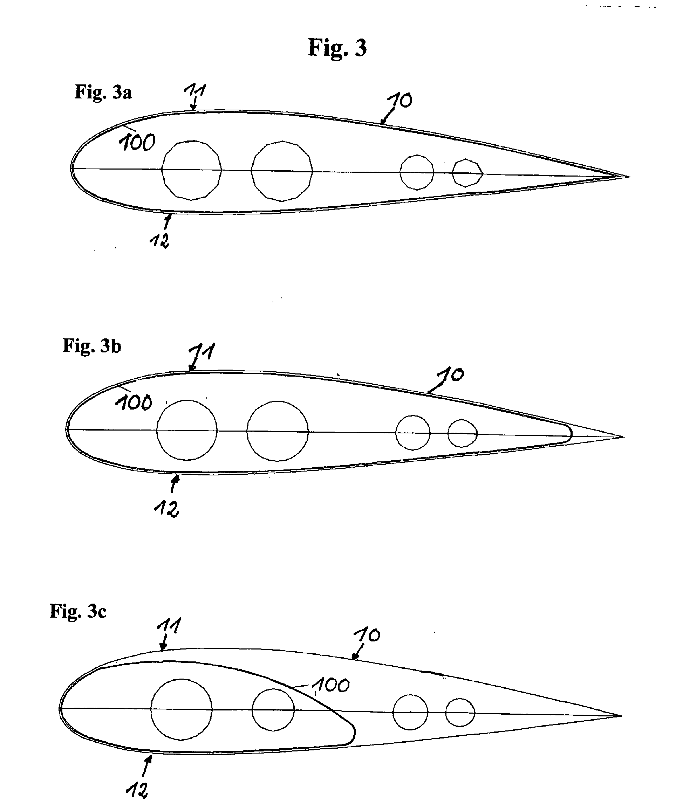

Die Figuren 3a bis 3c zeigen eine einzelne Profilrippe der Gleitschirmkappe 10 mit einer über das Gesamtprofil angebrachten erfindungsgemäßen Verstärkung zur Erhöhung der Profiltreue. Das Verstärkungselement 100 ist dabei gemäß einer der vorgenannten Möglichkeiten ausgeführt. Die Größe des Verstärkungselementes wird als Kompromiß zwischen Stabilität und maximalen Gewicht gewählt. Figur 3a zeigt eine komplette Verstärkung über den gesamten Umfang der Kammerinnenwand einer Profilkammer. Die Ausführungen der Figuren 3b und 3c zeigen entsprechend verkleinerte Auslegungen des Verstärkungselementes 100.

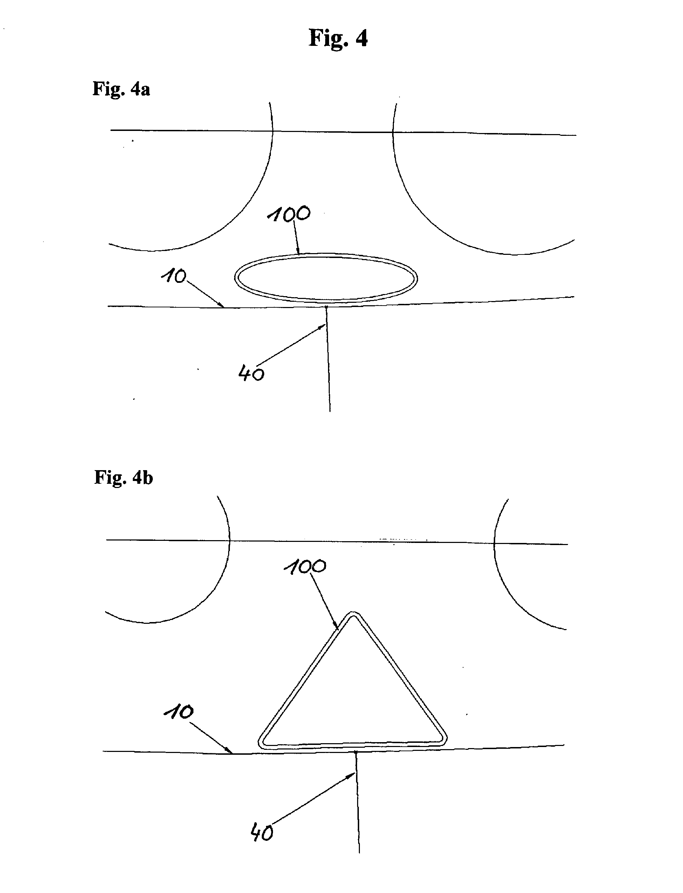

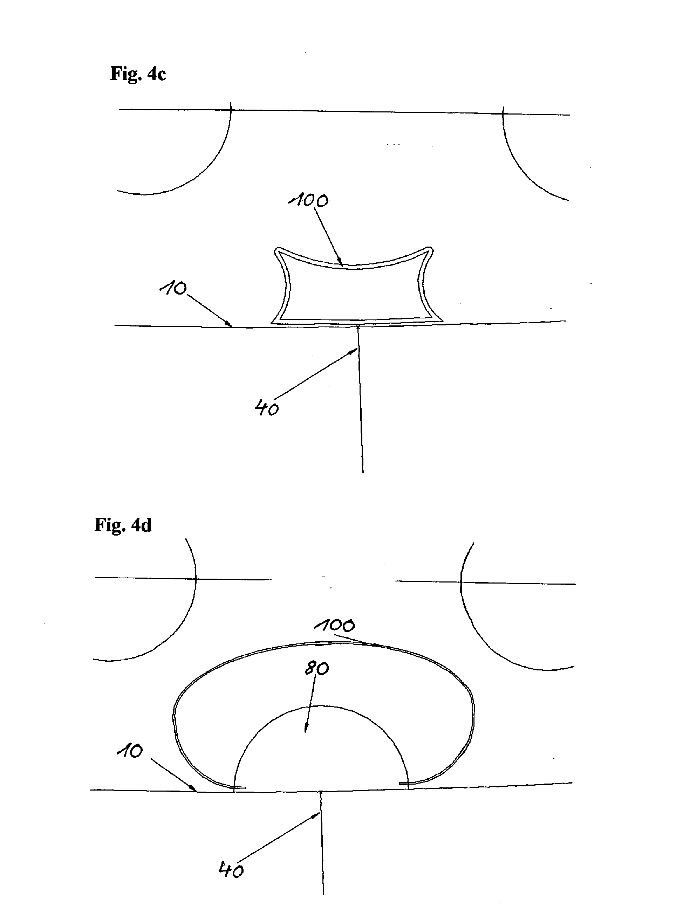

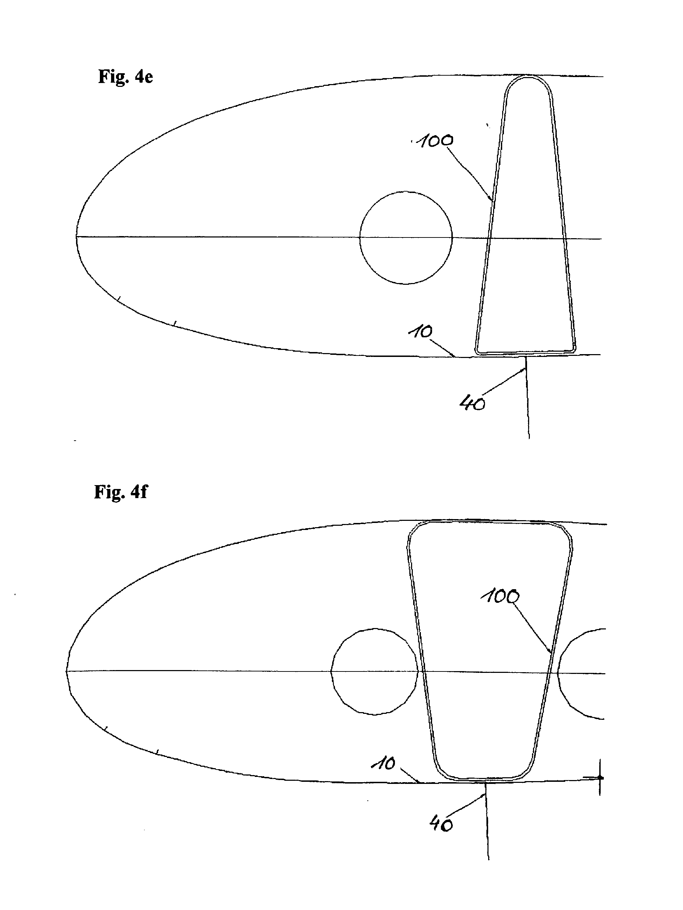

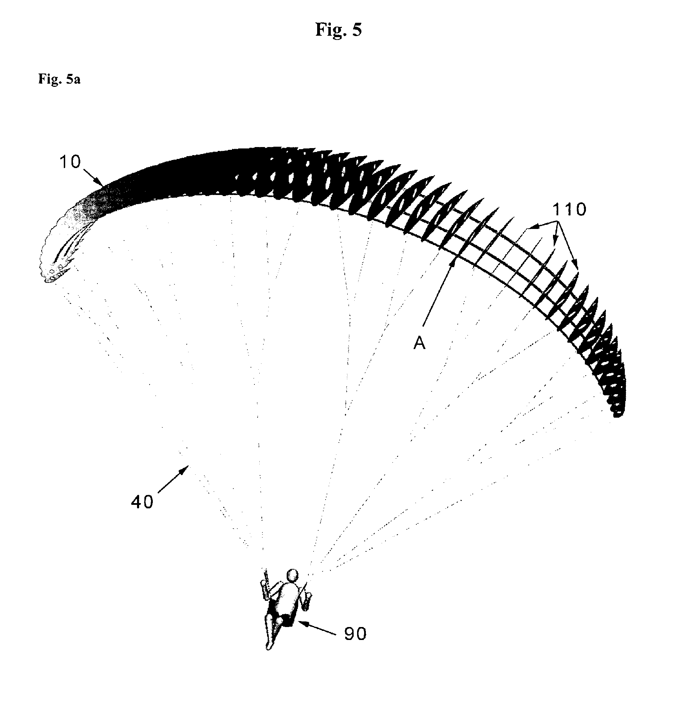

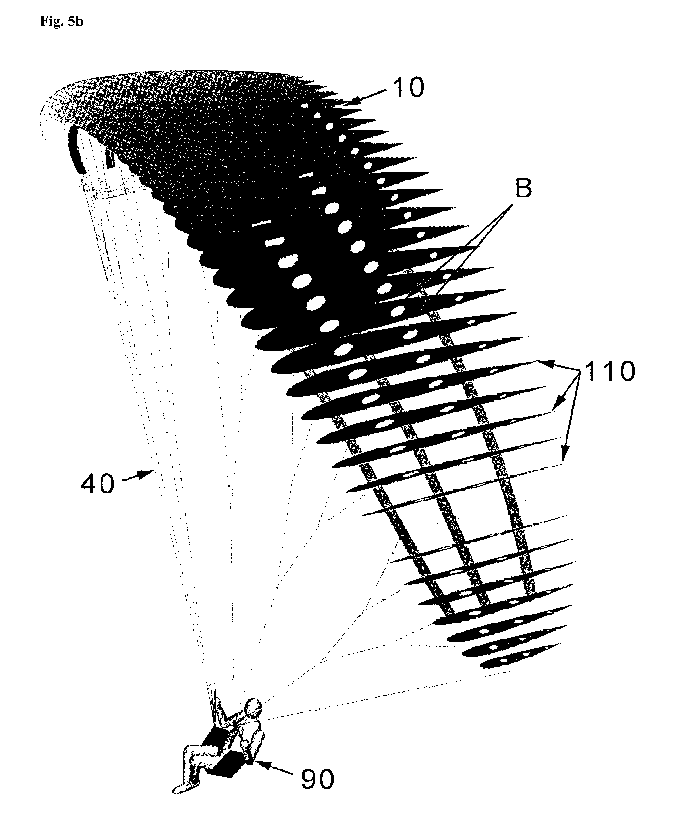

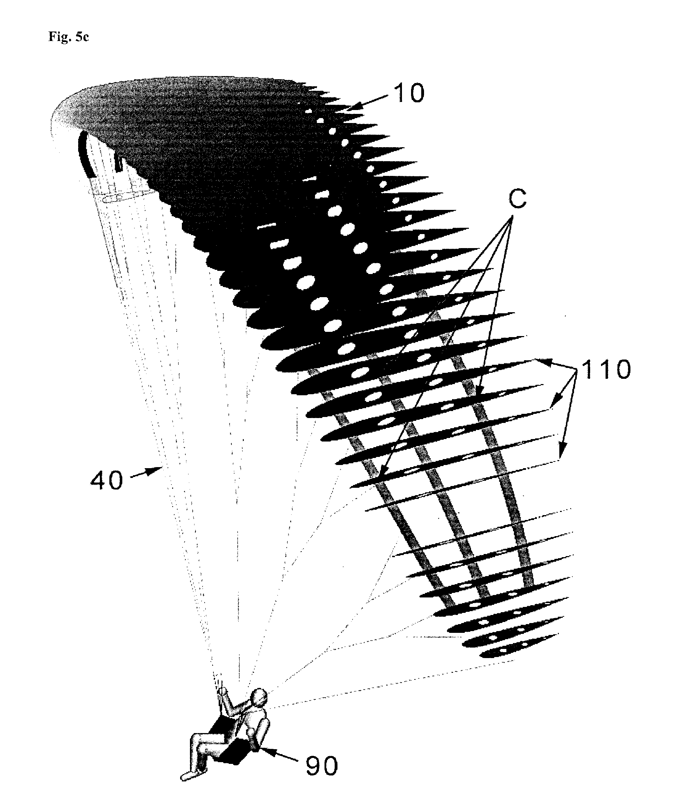

Um eine gezielte Verstärkung im Aufhängebereich der Gleitschirmkappe 10 zu erreichen, werden an der Aufhängestelle der Kammerinnenwand ein oder mehrere Verstärkungselemente 100 eingesetzt. Die Darstellungen der Figuren 4a bis 4d zeigen diverse mögliche Formgebungen, die sich bezüglich ihrer Elastizitäts- und Steifigkeitseigenschaften voneinander unterscheiden können. Generell sind beliebige Formen wählbar, die ein in sich geschlossenes, also ringförmiges, Verstärkungselement 100 bilden. Auch am Aufhängepunkt ist eine Kombination der erfindungsgemäßen Verstärkungen mit bereits existierenden bekannten Elementen 80 denkbar. Insbesondere zeigt die Figur 4d eine Kombination aus teilweise offener Verstärkung 30 mit einer zweiten Verstärkung 80, wodurch die erwünschte Schubsteifigkeit an der Aufhängestelle erlangt wird.

Die Anzahl der verwendeten Verstärkungselemente 100 innerhalb einer Gleitschirmkappe kann beliebige je nach Anforderung an Flugeigenschaften gewählt werden. Denkbare Ausführungen sehen die gezielte Verstärkung zumindest einer bzw. aller Profilkammern vor. Denkbar wäre es beispielweise, nur jede zweite oder dritte Kammer verstärkt auszuführen.

Die vorliegende Erfindung ermöglicht die gezielte, gegebenenfalls zusätzliche Verstärkung des Nasen-, Profil- und Aufhängebereichs von Gleitschirm-, Flexikite- oder Surfkiteflächen, um während des Startvorgangs oder sonstigen Flugphasen eine bessere oder den geforderten Ansprüchen gezielt eingesetzte Profiltreue mit geringer Gewichtserhöhung und reduzierter Verhängertendenz zu erreichen.

## Patentansprüche

1. Gleitschirmkappe (10), insbesondere für Gleit-, Flexikite, Surfkite- und Modellbauschirme bestehend aus einem Obersegel (11) und einem Untersegel (12) sowie aus ein Profil bildenden Profilrippen,
**dadurch gekennzeichnet,**
**dass** mindestens ein Verstärkungselement (100) vorgesehen ist, dessen Enden mittelbar oder unmittelbar miteinander schubsteif verbunden sind, wodurch ein in sich geschlossenes ringförmiges Verstärkungselement (100) ausgebildet ist.

2. Gleitschirmkappe (10) nach Anspruch 1, **dadurch gekennzeichnet, dass** das Verstärkungselement (100) in Verbindung mit einem oder mehreren beliebigen Elementen (60, 80) der Gleitschirmkappe (10) und/oder weiteren Verstärkungselementen bzw. Versteifungselementen (60, 80) in sich schubsteif geschlossen ist.

3. Gleitschirmkappe (10) nach einem der vorherigen Ansprüche, **dadurch gekennzeichnet, dass** wenigstens ein Verstärkungselement (100) im Profilnasen- und/oder im Aufhänge- und/oder über den gesamten Profilbereich angeordnet ist.

4. Gleitschirmkappe (10) nach einem der vorherigen Ansprüche, **dadurch gekennzeichnet, dass** wenigstens ein Verstärkungselement (100) kreisförmig, ellipsenförmig, tropfenförmig, zylindrisch oder 3 und/oder mehreckig, insbesondere dreieckförmig oder trapezförmig, ausgebildet ist.

5. Gleitschirmkappe (10) nach einem der vorherigen Ansprüche, **dadurch gekennzeichnet, dass** wenigstens ein Verstärkungselement (100) auf der den Kammern zugewandten Seite der Gleitschirmkappe (10) angeordnet ist.

6. Gleitschirmkappe (10) nach einem der vorhergehenden Ansprüche, **dadurch gekennzeichnet, dass** wenigstens ein Verstärkungselement (100) durch Aufkleben und/oder Aufschweißen und/oder Auf- bzw. Einnähen an der Gleitschirmkappe (10) befestigt ist und/oder in mindestens einer Führung bzw. Tasche innerhalb der Gleitschirmkappe (10) eingebracht ist

7. Gleitschirmkappe (10) nach einem der vorherigen Ansprüche, **dadurch gekennzeichnet, dass** wenigstens ein Verstärkungselement (100) aus Verbundwerkstoffen, Metallen wie Stahldraht, Kunststoff, insbesondere Kunststofffasern und/oder aus einem Stoffmaterial und/oder Folienmaterial und/oder einem oder mehreren Stäbchen und/oder sonstigen Material besteht.

8. Gleitschirmkappe (10) nach einem der vorherigen Ansprüche, **dadurch gekennzeichnet, dass** wenigstens ein Verstärkungselement (100) vollständig oder zumindest teilweise in Sandwichbauweise aus einem oder mehreren der Materialen gemäß Anspruch 7 besteht.

9. Verstärkungselement (100) zur Verstärkung einer Gleitschirmkappe, **dadurch gekennzeichnet, dass** das Verstärkungselement (100) eine geschlossene Struktur, insbesondere ringförmige Struktur aufweist und zur vollständigen bzw. teilweisen Verstärkung einer Gleitschirmkappe an dieser anbringbar ist.

10. Verstärkungselement (100) nach Anspruch 9, **dadurch gekennzeichnet, dass** durch Einbringung des Verstärkungselementes (100) in eine Gleitschirmkappe eine Gleitschirmkappe (10) gemäß einem der Ansprüche 1 bis 8 herstellbar ist.

11. Gleitschirmkappe (10), insbesondere für einen Gleit-, Flexikite, Surfkite- und Modellbauschirm bestehend aus einem Obersegel (11) und Ring-Konstruktionen, die ein Profil bzw. Profilrippen bilden.
